Europäisches Patentamt

European Patent Office

Office européen des brevets

(11) Numéro de publication : **0 116 247**
**B1**

(12) **FASCICULE DE BREVET EUROPÉEN**

(45) Date de publication du fascicule du brevet :
16.06.87

(51) Int. Cl.⁴ : **F 16 K 17/10**

(21) Numéro de dépôt : **83402465.5**

(22) Date de dépôt : **19.12.83**

(54) **Soupape de sûreté à pilotage intégré.**

(30) Priorité : **23.12.82 FR 8221663**

(43) Date de publication de la demande :
**22.08.84 Bulletin 84/34**

(45) Mention de la délivrance du brevet :
**16.06.87 Bulletin 87/25**

(84) Etats contractants désignés :
**BE CH DE GB IT LI NL**

(56) Documents cités :
**GB-A- 617 624**
**GB-A- 700 198**
**GB-A- 951 007**
**US-A- 2 487 418**
**US-A- 2 821 996**

(73) Titulaire : **COMMISSARIAT A L'ENERGIE ATOMIQUE**
**Etablissement de Caractère Scientifique Technique**
**et Industriel**
**31/33, rue de la Fédération**
**F-75015 Paris (FR)**

(72) Inventeur : **Vayra, Jean**
**"L'OUSTAU" Quartier Lisette**
**F-13590 Meyreuil (FR)**

(74) Mandataire : **Mongrédien, André et al**
**c/o BREVATOME 25, rue de Ponthieu**
**F-75008 Paris (FR)**

EP 0 116 247 B1

Jouve, 18, rue St-Denis, 75001 Paris, France

### Description

Une soupape de sûreté est disposée sur une enceinte contenant un fluide sous pression. Elle permet de limiter la pression régnant à l'intérieur de cette enceinte. En cas de surpression, la soupape s'ouvre, ce qui permet l'évacuation hors de l'enceinte d'une quantité de fluide, et par conséquent la limitation de la pression à l'intérieur de cette dernière.

Les soupapes de sûreté, encore appelées clapets de surpression, comportent un clapet, constitué par exemple par une bille, obturant un orifice et maintenu sur son siège par un piston d'appui poussé par un ressort. La force exercée par le ressort est réglable à l'aide d'une vis qui le comprime plus ou moins. De cette manière, il est possible de régler la pression à partir de laquelle la bille se soulève sur son siège. Une telle soupape est montée sur la paroi d'une enceinte contenant un fluide sous pression. Lorsque la pression à l'intérieur de cette enceinte dépasse une valeur déterminée, la bille se soulève et le fluide contenu dans l'enceinte s'écoule à l'extérieur de celle-ci. On évite ainsi les risques d'avaries qui pourraient survenir en cas de surpression dans l'enceinte considérée.

Un inconvénient de tels clapets de surpression réside dans le fait qu'ils réagissent instantanément aux variations de la pression régnant à l'intérieur de l'enceinte. Il en résulte de nombreux déclenchements du clapet, même pour évacuer une quantité de fluide très limitée. Le phénomène de battement du clapet qui s'ensuit peut aboutir à une détérioration du siège de ce dernier.

Les soupapes de sûreté à pilotage remédient à cet inconvénient. Elles comportent un clapet principal, par lequel le fluide est évacué hors de l'enceinte, et un dispositif de pilotage. L'ouverture du clapet principal est commandée par le dispositif de pilotage qui est réglé sur la valeur de la pression régnant à l'intérieur de l'enceinte.

Grâce à cette disposition, les soupapes à pilotage fonctionnent en tout ou rien : le clapet principal est soit ouvert, soit fermé, sans position intermédiaire. Ainsi, les risques de battement sont limités et la durée de vie de la soupape est accrue.

L'invention concerne une soupape de sûreté à pilotage pour une enceinte contenant un fluide sous pression, la soupape comprenant un corps de soupape fixé à une paroi de l'enceinte, le corps étant pourvu d'une entrée et d'une sortie pour le fluide, l'entrée étant en communication avec l'enceinte sous pression et la sortie étant à l'atmosphère, ledit corps déterminant une chambre qui met en communication l'entrée et la sortie, une soupape disposée dans la chambre interrompant la communication entre l'entrée et la sortie, ladite soupape comportant une tige, un clapet principal solidaire de la tige et apte à obturer un siège situé entre l'entrée et la sortie et un piston solidaire de la tige et coulissant dans la chambre, des moyens élastiques pour appliquer le clapet principal sur le siège, un canal traversant axialement la soupape, un clapet de pilotage, obturant le canal traversant la soupape, des moyens élastiques pour appliquer le clapet de pilotage sur l'orifice, et un orifice calibré mettant en communication la chambre avec l'atmosphère.

On connaît (GB-A-700 198) une soupape à pilotage intégré de ce type ; cette soupape comporte un corps 5, une entrée 6 pouvant être raccordée à un circuit hydraulique et une sortie 7 pour le fluide ; la chambre supérieure 8 et la chambre inférieure 9 sont isolées par une soupape 12 de type autoclave. La soupape 12 comporte un passage axial 15 fermé par une deuxième soupape 17 de section de passage plus faible. Lorsque cette soupape s'ouvre, elle laisse pénétrer le fluide dans une chambre fermée par le piston 27. Ce piston commande l'ouverture de la soupape. Un orifice calibré 65 met en communication l'espace annulaire 50, c'est-à-dire la chambre, avec la chambre inférieure 9 qui communique avec la canalisation d'évacuation 7. L'orifice 65 possède un faible diamètre de manière à éviter une chute rapide de la pression pendant la commande de la soupape.

Cependant, dans cette soupape, l'orifice 65 reste ouvert en permanence. Lorsqu'une surpression se produit dans l'enceinte sous pression, le clapet A s'ouvre et le fluide pénètre dans la chambre 50. Mais, étant donné que l'orifice 65 reste ouvert en permanence, le fluide est évacué simultanément par cet orifice. L'augmentation de pression dans la chambre 50 est donc retardée. Par suite, l'ouverture du clapet principal est également retardée. Il se produit donc un décalage entre l'apparition de la surpression dans l'enceinte et l'ouverture du clapet principal.

Inversement, en fin de surpression, la pression dans la chambre 50 diminue rapidement. La fermeture de la soupape auxiliaire 17 est donc brutale. Il en résulte un risque de matage de son siège.

On connaît également (US-A-2 487 418) une soupape comprenant un corps de soupape pourvu d'une entrée et d'une sortie pour un fluide. Une chambre 56 met en communication l'entrée et la sortie. Une soupape comportant un clapet principal 54 est apte à obturer un siège situé entre l'entrée et la sortie.

Toutefois, cette soupape n'est pas une soupape à pilotage intégré, mais un ensemble de deux soupapes montées en série, étant donné qu'elle comporte une tuyauterie extérieure. En outre, elle utilise une membrane qui peut difficilement être à la fois souple et résistante à la température.

La présente invention a pour but de porter remède à ces problèmes. Elle résout le problème consistant à créer une soupape de sûreté à pilotage intégré dans laquelle l'orifice mettant la chambre à l'atmosphère s'ouvre après la soupape principale et se ferme avant elle.

Conformément à l'invention, ce problème est résolu par des moyens pour obturer ledit orifice lorsque la soupape est en position fermée, lesdits moyens s'ouvrant après la soupape principale et se fermant avant elle, et en ce que les moyens pour obturer ledit canal sont constitués par une aiguille, formant un clapet de pilotage, logée dans le canal axial par un rétrécissement formé dans ledit canal et déterminant un siège pour l'aiguille.

Selon une réalisation préférée, les moyens pour obturer l'orifice de la chambre sont constitués par un pointeau obturateur monté coulissant sur la soupape, l'entrée de l'orifice formant un siège pour ledit pointeau, ce dernier étant maintenu élastiquement en appui sur ce siège, le pointeau comportant en outre une partie saillante entraînée par la soupape dans son mouvement d'ouverture de manière à soulever le pointeau obturateur de son siège lorsque la soupape s'ouvre.

Les avantages obtenus grâce à cette invention consistent en ce que, lorsqu'une surpression se produit dans l'enceinte sous pression, la pression dans la chambre augmente plus rapidement. Par conséquent, le temps de réaction, avant l'ouverture de la soupape principale, est diminué.

Lors de la fermeture de la soupape principale, un matelas de fluide est emprisonné dans la chambre 13, ce qui amortit la fermeture de la soupape principale. Les risques de matage du siège sont donc supprimés.

De préférence, la soupape est prolongée du côté de la tête de soupape par un tube plongeur qui a pour but de réduire l'influence de l'échappement tourbillonnaire du fluide hors de l'enceinte sur l'aiguille allongée.

D'autres caractéristiques et avantages de la description apparaîtront mieux à la lecture de la description qui suit, donnée à titre illustratif et faite en référence au dessin annexé sur lequel :

la figure unique représente une vue en coupe d'un mode de réalisation de l'invention.

On a représenté sur la figure unique un mode de réalisation de l'invention. La soupape de sûreté, comprend un corps de soupape 4 fixé sur la paroi 6, représentée en trait mixte, d'une enceinte à l'intérieur 12 de laquelle est contenu un fluide sous pression. Le corps 4 délimite un volume intérieur formant une chambre. Une entrée et une sortie sont pratiquées dans la paroi du corps 4. L'entrée 10, met en communication l'enceinte sous pression avec le volume intérieur de la soupape.

Par ailleurs, le corps comporte une sortie 27, qui met en communication son volume intérieur avec l'atmosphère. Dans l'exemple représenté, cette sortie est constituée par une conduite 27.

A sa partie supérieure, le corps comporte un cylindre 8. L'extrémité est fermée et détermine une chambre cylindrique 13. Un orifice de faible section 14 est prévu dans la paroi du cylindre 8 de manière à mettre la chambre 13 en communication avec l'atmosphère. La section de passage de l'orifice 14b peut être réglée au moyen d'une vis, par exemple une vis pointeau 16. On réalise ainsi un orifice calibré 15. Entre les extrémités du cylindre on trouve une paroi radiale 18 comportant un passage central 20, et une deuxième paroi radiale 22 comportant un trou central 24 dont les bords forment un siège 26 pour le clapet principal de la soupape.

A l'intérieur du corps de soupape 4, on trouve une soupape 30. Elle se compose d'une tige 32, d'un clapet 34 solidaire de la tige 32 et d'un piston 36 également solidaire de la tige 32.

Lorsque le clapet 34 est appliqué sur le siège 26, l'enceinte sous pression 12 est fermée de manière étanche. Au contraire, lorsque le clapet soupape 34 est soulevé de son siège, l'intérieur 12 de l'enceinte est en communication avec l'atmosphère par l'intermédiaire des trous de passage 10, comme le montrent les flèches 38, puis par la canalisation 27.

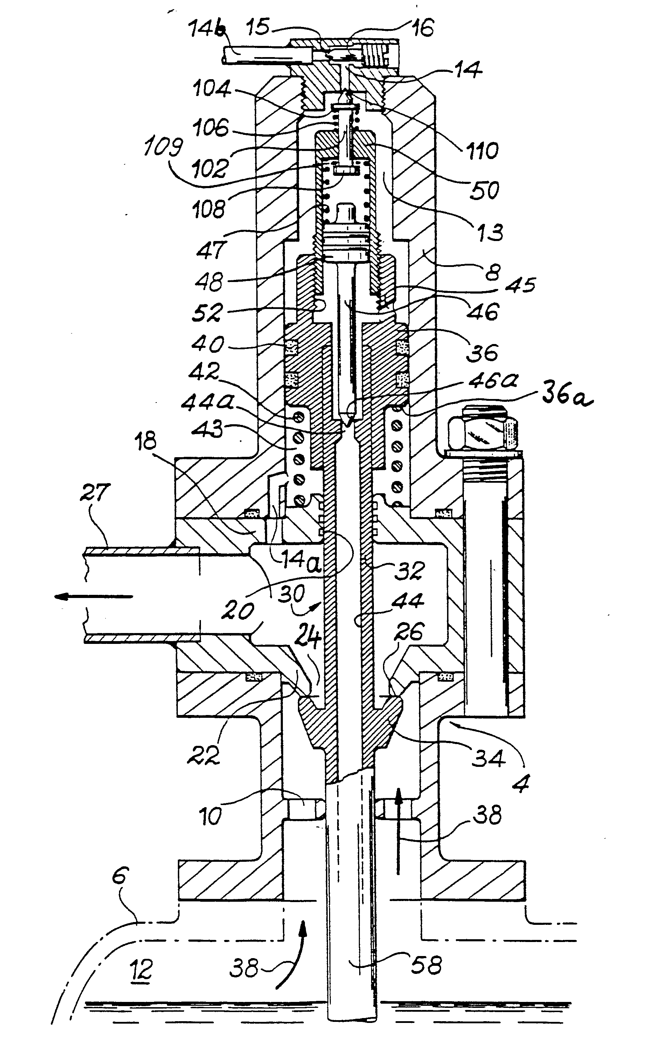

Le piston 36 est apte à coulisser dans le cylindre 8. Il comporte des moyens d'étanchéité, par exemple des segments 40 disposés dans des gorges de manière à réaliser une étanchéité entre la paroi intérieure du cylindre 8 et le piston. La soupape 30 est rappelée en position fermée, c'est-à-dire vers le haut dans l'exemple représenté sur la figure 1, par un ressort de rappel 42. Ce ressort, qui entoure la tige 32, prend appui à l'une de ses extrémités sur la paroi 18 et à son autre extrémité sur la face inférieure 36a du piston 36. On remarque également la présence d'un passage de communication 14a entre l'espace annulaire 43 contenant le ressort 42 et la sortie 27. Le canal 14a a pour fonction de permettre l'évacuation de l'air contenu dans ce volume lors de l'ouverture de la soupape, c'est-à-dire de son mouvement vers le bas, afin de ne pas le comprimer, ce qui s'opposerait au mouvement d'ouverture de la soupape 32.

La soupape 30 est traversée de part en part par un canal axial 44 qui met en communication la chambre 13 du cylindre avec l'enceinte sous pression 12. A l'intérieur du canal 44 on trouve une aiguille 46 comportant une extrémité pointue 46a.

A son autre extrémité, l'aiguille 46 comporte une collerette 48. Un bouchon 50 est vissé dans un trou taraudé 52 pratiqué dans le piston 36. Un ressort 47 prend appui à l'une de ses extrémités sur la collerette 48 et à son autre extrémité à l'intérieur du bouchon 50. On peut régler la force d'appui du ressort 47 en vissant plus ou moins le bouchon 50 à l'intérieur du trou taraudé 52.

L'extrémité 46a de l'aiguille vient en appui sur une partie de diamètre rétréci 44a du canal 44 et l'obture de manière étanche.

L'espace situé sous la collerette 48 communique avec la chambre 13 par un orifice 45 prévu dans le piston 36.

Conformément à l'invention, la soupape comporte des moyens qui permettent d'obturer l'orifice 14b lorsque le clapet principal 34 est en position fermée. Ces moyens s'ouvrent après la soupape principale 30 et se ferment avant elle. Dans l'exemple représenté, ils sont constitués par un pointeau 102 qui coulisse dans le bouchon 50. Le pointeau comporte deux collerettes. La collerette 104 est située à l'extrémité supérieure du pointeau à l'extérieur du bouchon 50. L'autre collerette 108 est située à l'extrémité inférieure du pointeau 102, à l'intérieur du bouchon 50. Le pointeau comporte une pointe 110 qui s'applique sur l'entrée de l'orifice 14 et qui est apte à l'obturer. Un ressort 106 est disposé entre la face supérieure du bouchon 50 et la collerette 104.

L'orifice 15 disposé dans le canal de purge 14 constitue un orifice calibré qui est réglable au moyen de la vis 16. La position du pointeau 102 par rapport au bouchon 50 peut être réglée au moyen de rondelles 109 disposées autour de la tige du pointeau entre la face interne du bouchon 50 et la collerette 108. Dans une variante de réalisation (non représentée) la position du pointeau pourrait être réglée au moyen d'une vis et d'un écrou montés sur une partie filetée de la tige du pointeau 102.

Lorsque le pointeau 102 est appliqué par le ressort 106 sur l'entrée du canal de purge 14, la chambre 13 ne communique pas avec l'atmosphère. En revanche, l'espace annulaire 43 communique en permanence avec l'atmosphère par le canal 14a.

Le fonctionnement de la soupape de sûreté de l'invention est le suivant. Lors de l'apparition d'une surpression dans l'enceinte 12, l'aiguille 46 se soulève et livre passage au fluide contenu dans l'enceinte. Ce fluide pénètre dans la chambre 13. Cette chambre est fermée par le pointeau obturateur 102. La pression augmente donc rapidement à l'intérieur de la chambre 13 jusqu'à dépasser l'effort du ressort de tarage, constitué par le ressort hélicoïdal 42 dans la réalisation représentée, et qui maintient la soupape 30 sur son siège. Le clapet 34 s'ouvre. Le fluide en surpression est alors évacué par les orifices 10, l'orifice 24 et la canalisation 27.

Dans son mouvement d'ouverture, le clapet principal entraîne le pointeau 102 par l'intermédiaire du bouchon 50 qui entraîne la collerette 108. La pointe 110 se dégage alors de l'entrée du canal de purge 14, ce qui met la chambre 13 en communication avec l'atmosphère.

Aussi longtemps que la pression à l'intérieur de l'enceinte 12 reste supérieure à la pression de tarage, le clapet principal reste ouvert parce que l'orifice calibré 15 a été réglé de telle manière que sa section de passage soit inférieure à celle qui est autorisée par l'aiguille 46. De cette manière, la pression à l'intérieur de la chambre 13, c'est-à-dire la pression de pilotage, reste suffisante pour comprimer le ressort hélicoïdal 42 et maintenir le clapet principal ouvert.

Lorsque la pression à l'intérieur de l'enceinte 12 revient à une valeur normale, le clapet de pilotage 34 se referme. La pression à l'intérieur de la chambre 13 diminue par évacuation du fluide au travers du canal de purge 14, ce qui conduit à un mouvement de fermeture du clapet principal. Au cours de ce mouvement, la pointe 110 se rapproche de l'ouverture de l'orifice calibré 15 jusqu'à le fermer de manière étanche. Cette fermeture se produit un peu avant la fin de la course de la soupape 30. Le canal 14 étant fermé, un matelas de fluide qui amortit la fermeture du clapet principal est enfermé dans la chambre supérieure 13. Les risques d'un matage du siège 26 sont ainsi supprimés.

On remarque que, à ce stade, la pression qui règne dans la chambre 13 est supérieure à la pression atmosphérique. Toutefois, à la longue, l'équilibre se rétablit étant donné que les segments 40 ne sont pas absolument étanches. En effet, ces segments sont du type fendu et il existe une très légère fuite, de telle sorte qu'au bout d'un certain temps, la pression à l'intérieur de la chambre 13 redevient égale à la pression atmosphérique.

Si une surpression apparaît dans l'enceinte 6 avant que la pression à l'intérieur de la chambre 13 ne soit redevenue égale à la pression atmosphérique, l'ouverture du clapet principal est plus rapide étant donné que la pression d'ouverture de ce clapet sera atteinte plus rapidement. L'existence d'une pression résiduelle dans la chambre 13 n'est donc pas un inconvénient.

La soupape qui vient d'être décrite comporte les avantages des soupapes de sûreté à pilotage, c'est-à-dire le fait d'éviter le phénomène de battement du clapet d'évacuation. Elle permet la suppression des canalisations de liaison entre la soupape et le dispositif autonome de pilotage. La stabilité de fonctionnement est encore accrue par l'adjonction d'un tube plongeur 58 situé du côté de la tête de soupape 34. Le tube plongeur 58 a pour effet de soustraire l'aiguille 46 aux variations brutales de pression qui se produisent à proximité des ouvertures 10. La pression à laquelle l'aiguille 46 est sensible est celle qui règne en un endroit plus éloigné de l'ouverture d'évacuation, c'est-à-dire un endroit où elle est plus constante.

En outre, le temps de réponse du clapet principal en cas de surpression apparaissant dans l'enceinte est réduit par rapport à une soupape de l'art antérieur par le fait que la pression de pilotage qui commande l'ouverture de cette soupape principale est atteinte plus rapidement. Lors de la fermeture de la soupape, le mouvement du clapet principal est amorti et le matage du siège évité.

**Revendications**

1. Soupape de sûreté à pilotage pour une enceinte contenant un fluide sous pression, la soupape comprenant un corps de soupape (4) pourvu d'une entrée (10) en communication avec l'enceinte sous pression (12) et d'une sortie (27) en communication avec l'entrée (10), une soupape (30) apte à interrompre la communication entre l'entrée (10) et la sortie (27), ladite soupape (30) comportant une tige (32), un clapet principal (34) solidaire de la tige (32) et apte à obturer un siège (26) situé entre l'entrée (10) et la sortie (27) et un piston (36) solidaire de la tige (32) et coulissant dans une chambre (13), des moyens élastiques (42) pour appliquer le clapet principal (32) sur le siège (26), un canal (44) traversant axialement la soupape (30), un clapet de pilotage (46) obturant le canal (44) traversant la soupape (30), des moyens élastiques (47) pour appliquer le clapet de pilotage (46) sur son siège et un orifice calibré (14) mettant en communication la chambre (13) avec l'atmosphère, caractérisée en ce qu'elle comporte des moyens (102, 104, 106) pour obturer ledit orifice (14) lorsque la soupape (30) est en position fermée, lesdits moyens (102, 104, 106) s'ouvrant après la soupape principale (34) et se fermant avant elle, et en ce que les moyens pour obturer ledit canal (44) sont constitués par une aiguille (46), formant un clapet de pilotage, logée dans le canal axial (44) par un rétrécissement (44a) formé dans ledit canal (44) et déterminant un siège pour l'aiguille (46).

2. Soupape selon la revendication 1, caractérisée en ce que les moyens pour obturer l'orifice (14) sont constitués par un pointeau obturateur (102) monté coulissant sur la soupape (30), l'entrée de l'orifice (14) formant un siège pour ledit pointeau, ce dernier étant maintenu élastiquement en appui sur ce siège (110), le pointeau (102) comportant en outre une partie saillante (108) entraînée par la soupape (30) dans son mouvement d'ouverture de manière à soulever le pointeau obturateur (102) de son siège (110) lorsque la soupape s'ouvre.

3. Soupape selon la revendication 1, caractérisée en ce que la soupape (30) est prolongée du côté du clapet principal (34) par un tube plongeur (58).

4. Soupape selon la revendication 1, caractérisée en ce que les moyens élastiques pour appliquer l'aiguille (46) sur son siège sont constitués par un trou taraudé (52) pratiqué dans la soupape (30) et coaxial à l'orifice (44), par un bouchon (50) vissé dans ledit trou taraudé (52) et par un ressort (47) en appui contre le bouchon (50) sur une extrémité (48) de l'aiguille (46).

5. Soupape de sûreté selon la revendication 2, caractérisée en ce qu'elle comporte des moyens (109) pour régler la course du pointeau obturateur (102).

6. Soupape selon la revendication 5, caractérisée en ce que les moyens pour régler la course du pointeau obturateur (102) sont constitués par des rondelles (109) intercalées entre la partie saillante (108) et le bouchon (50).

7. Soupape selon la revendication 5, caractérisée en ce que les moyens pour régler la course du pointeau obturateur (102) sont constitués par un écrou et un contre-écrou placés sur la tige de ce pointeau.

**Claims**

1. Controlled safety valve for a vessel containing a fluid under pressure, the valve comprising a valve body (4) equipped with an inlet (10) in communication with the pressure vessel (12) and an outlet (27) in communication with the inlet (10), a valve (30) designed to break communication between the inlet (10) and the outlet (27), the said valve (30) having a rod (32), a main shutter (34) integral with rod (32) and designed to close off a seat (26) located between the inlet (10) and the outlet (27), and a piston (36) integral with the rod (32) and sliding in a chamber (13), elastic means (42) for laying the main shutter (34) against the seat (26), a channel (44) extending axially through the valve (30), a control shutter (46) closing off the channel (44) extending through the valve (30), elastic means (47) for laying the control shutter (46) against its seat, and a calibrated orifice (14) placing the chamber (13) in communication with the atmosphere, characterized in that it comprises means (102, 104, 106) for closing off the said orifice (14) when the valve (30) is in the closed position, the said means (102, 104, 106) opening after the main valve (30) and closing before the latter, and in that the means for closing off the said channel (44) consist of a needle (46) which forms a control shutter and which is set in the axial channel (44) by a contraction (44a) formed in the said channel (44) and defining a seat for the needle (46).

2. Valve according to Claim 1, characterized in that the means for closing off the orifice (14) consist of a shut-off pin (102) mounted slidably on the valve (30), the inlet of the orifice (14) forming a seat for the said pin, the latter being held elastically up against this seat (110), and the pin (102) also comprising a projecting part (108) driven by the valve (30) in its opening movement, so as to lift the shut-off pin (102) from its seat (110) when the valve opens.

3. Valve according to Claim 1, characterized in that the valve (30) is extended by a plunger tube (58) on the same side as the main shutter (34).

4. Valve according to Claim 1, characterized in that the elastic means for laying the needle (46) against its seat consist of a tapped hole (52) made in the valve (30) and coaxial relative to the channel (44), of a plug (50) screwed into the said tapped hole (52) and of a spring (47) bearing against the plug (50) on one end (48) of the needle (46).

5. Safety valve according to Claim 2, characterized in that it has means (109) for adjusting the travel of the shut-off pin (102).

6. Valve according to Claim 5, characterized in that the means for adjusting the travel of the shut-off pin (102) consist of washers (109) inserted between the projecting part (108) and the plug (50).

7. Valve according to Claim 5, characterized in that the means for adjusting the travel of the shut-off pin (102) consist of a nut and a lock which is arranged on the shank of the pin.

**Patentansprüche**

1. Sicherheitsventil mit Pilotsteuerung für einen Behälter, der ein unter Druck stehendes Fluid enthält, das Ventil bestehend aus einem Ventilgehause (4), das mit einem Eingang (10) versehen ist, der mit dem unter Druck stehenden Behälter (12) verbunden ist, und weiterhin mit einem Ausgang (27) versehen ist, der mit dem Eingang (10) eines Ventilschiebers (30) verbunden ist, der dazu eingerichtet ist, die Verbindung zwischen dem Eingang (10) und dem Ausgang (27) zu unterbrechen, wobei der Ventilschieber (30) enthält : einen Stab (32), einen mit dem Stab (32) fest verbundenen Hauptventilkörper (34), der dazu eingerichtet ist, einen Sitz (26) zu verschließen, der zwischen dem Eingang (10) und dem Ausgang (27) angeordnet ist, und einen mit dem Stab (32) fest verbundenen Kolben (36), der in einer Kammer (13) gleitet, elastische Einrichtungen (42) zum Vorspannen des Hauptventilkörpers (32) gegen den Sitz (26), einen Kanal (44), der in axialer Richtung den Ventilschieber (30) durchquert, einen Pilotsteuerventilkörper (46), der den den Ventilschieber (30) durchquerenden Kanal (44) verschließt, elastische Einrichtungen (47) zum Vorspannen des Pilotsteuerungsventilkörpers (46) gegen seinen Sitz und eine kalibrierte Öffnung (14), die die Kammer (13) mit der Atmosphäre in Verbindung bringt, dadurch gekennzeichnet, daß es Einrichtungen (102, 104, 106) zum Verschließen der Öffnung (14) aufweist, wenn der Ventilschieber (30) sich im geschlossenen Zustand befindet, wobei die genannten Einrichtungen (102, 104, 106) sich nach dem Hauptventilkörper (34) öffnen und sich vor diesem schließen, und daß die Einrichtungen zum Verschließen des genannten Kanals (44) von einer Nadel (46) gebildet sind, die einen Pilotsteuerungsventilkörper bildet, wobei die Nadel in dem Axialkanal (44) von einer Einschnürung (44a) gehalten ist, die in dem Kanal (44) ausgebildet ist und einen Sitz für die Nadel (46) bestimmt.

2. Ventil nach Anspruch 1, dadurch gekennzeichnet, daß die Einrichtungen zum Verschließen der Öffnung (14) von einer Verschlußspitze (102) gebildet sind, die gleitfähig an dem Ventilschieber (30) befestigt ist, wobei der Eingang der Öffnung (14) einen Sitz für die genannte Spitze bildet und letztere elastisch an dem Sitz (110) in Anlage gehalten ist, wobei die Spitze (102) weiterhin einen vorspringenden Abschnitt (108) aufweist, der von dem Ventilschieber bei seiner Öffnungsbewegung so mitgenommen wird, daß sie die Verschlußspitze (102) von ihrem Sitz (110) abhebt, wenn das Ventil sich öffnet.

3. Ventil nach Anspruch 1, dadurch gekennzeichnet, daß der Ventilschieber (30) auf der Seite des Hauptventilkörpers (34) durch ein Tauchrohr (58) verlängert ist.

4. Ventil nach Anspruch 1, dadurch gekennzeichnet, daß die elastischen Einrichtungen zum Vorspannen der Nadel (46) auf ihren Sitz von einer Gewindebohrung (52) gebildet sind, die in dem Ventilschieber (30) koaxial zur Öffnung (44) ausgebildet ist, und weiterhin durch einen Stopfen, der in die Gewindebohrung (52) geschraubt ist, und von einer Feder (47) gebildet sind, die gegen den Stopfen (50) an einem Ende (48) der Nadel (46) anliegt.

5. Sicherheitsventil nach Anspruch 2, dadurch gekennzeichnet, daß es Einrichtungen (109) zum Regeln der Verschiebung der Verschlußspitze (102) aufweist.

6. Ventil nach Anspruch 5, dadurch gekennzeichnet, daß die Einrichtungen zum Regeln der Verschiebung der Verschlußspitze (102) von Scheiben (109) gebildet sind, die zwischen den vorspringenden Abschnitt (108) und den Stopfen (50) eingefügt sind.

7. Ventil nach Anspruch 5, dadurch gekennzeichnet, daß die Einrichtungen zum Regeln der Verschiebung der Verschlußspitze (102) von einer Mutter und einer Kontermutter gebildet sind, die auf dem Stab dieser Spitze angeordnet sind.

1